# EUROPEAN PATENT SPECIFICATION

(11) **EP 2 740 961 B1**
(45) Date of publication and mention of the grant of the patent: **15.02.2017**
(21) Application number: 12008241.7
(22) Date of filing: 10.12.2012
(51) Int. Cl.: F16D 65/12

(54) **Connecting means for brake disc**
Verbindungseinrichtung für Scheibenbremse
Moyens de connexion pour disque de frein

(43) Date of publication of application: 11.06.2014
(73) Proprietor: Brembo SGL Carbon Ceramic Brakes GmbH, 86405 Meitingen (DE)
(72) Inventor: Reulein, Harald, 86750 Megesheim (DE); Cretu, Michael, 86356 Neusäss (DE); Roesler, Markus, 83714 Miesbach (DE)

(56) References cited:
- EP-A1- 1 443 235
- EP-A1- 1 970 591
- WO-A1-2007/049312
- WO-A1-2009/154548
- DE-C1- 19 807 184
- US-A- 5 297 660

## Description

### Field of the Invention

The invention relates to a connecting means for a brake disc assembly including a clamp and to a brake disc assembly provided with such connecting means.

Such a connecting element is for instance known from WO-A-2009/154548.

### Background of the Invention

Disc brakes slow rotation of a rotating body by means of friction caused by pushing brake pads against a brake disc, typically using a set of callipers. Rotational energy is converted into heat through the friction occurring between brake pads and the brake disc. The thermal energy generated in this process is absorbed primarily by the brake disc assembly. Most of the thermal energy is subsequently dissipated by means of the brake disc, which can be an internally vented disc comprising ventilation channels. A brake disc assembly generally comprises a brake disc ring coupled to a bell.

Composite disc brakes have been proposed to reduce the thermal stresses which conventional brake discs are subjected to, in particular in high-performance applications. Integrally formed discs of previously known type typically have an annular element or braking band and a hub or bell arranged, respectively, for providing the braking surfaces for the brake callipers and for coupling the brake disc to a wheel. In contrast to the integrally formed configuration of conventional brake discs, the braking band and the bell of composite disc brakes are produced as separate parts, which may be made of different materials, and which are coupled by suitable connecting means in order to form a brake disc assembly.

Brake disc assemblies, in particular the brake disc ring, are designed to receive and dissipate the heat generated during braking, leading to the different components being subjected to mechanical and thermal stress. Brake discs have been traditionally made of cast iron, which typically has a thermal stability of up to about 700°C, limiting the maximum operating temperature. Recently, composites such as reinforced carbon or ceramic matrix composites have been used for brake discs, offering higher thermal stability. For example, Carbon fibre-reinforced silicon carbide materials (C/SiC) can provide a thermal stability of up to 1350°C, and brake discs made from C/SiC can exhibit a maximum operating temperature of up to 900°C in a non-inert atmosphere (e.g., ambient atmosphere).

EP 1395760 describes that composite disks have been found very effective for solving problems associated with thermal expansion, but are susceptive for harmful vibrations and jolts occurring in use that give rise to undesired noise or compromise the integrity of the disks. If the connecting means between the brake disc and the bell provide for the interposition of a flat spring, the continual hammering effect due to these vibrations may cause the ends of the spring to cut into the surface of the bell against which they bear, resulting in a reduction in the resilient effect exerted by the spring and an increase in the play in the coupling between the braking band and the bell, which leads to unacceptable deterioration of the mechanical and acoustical properties of the brake disc assembly. The document further describes a brake disc assembly having a bell with multiple circumferentially arranged and radially spaced recesses, whereas the brake disc ring is mounted to the bell by multiple connecting means comprising a plurality of inserts made of wear resistant material, each interposed between a respective resilient element, such as a flat spring, and the bell so as to provide bearing surfaces for the spring and thus to prevent wear of the surface of the bell facing the spring and the consequent reduction of the axial load exerted by the spring.

DE 10 2006 058 174 describes problems arising from the use of known connecting means such as described above, indicating that in some designs, hot spots or rattling effects can occur. Hot spots denote areas of concentrated heat in certain regions on the brake disc ring, in particular on the braking surfaces. Rattling effects can include periodically occurring variations in the friction forces in the presence of constant brake force applied to the braking system. Both effects can induce vibrations into the suspension system, the braking system, and/or the steering system of a vehicle. The document further describes connecting means for compound brake discs that address the above-described problems. The connecting means include a particular spring element that has a very flat spring characteristic and is provided with particularly shaped resilient regions that have a rounded contact area in order to protect a corresponding contact surface on the bell.

It has been found that the know connecting means are still prone to issues with noise vibration harshness (NHV). Further, it is an object of the invention to make use of existing components of the connecting means such that the number of new components is minimized. The present invention provides a connecting means designed to overcome the aforementioned deficiencies of know products.

### Summary of the Invention

According to the invention, there is provided a clamp for a brake disc assembly according to claim 1.

In another aspect, the first and second outer portions have the same shape and are symmetrically arranged with respect to the central portion.

In accordance with claim 1, the clamp is substantially U-shaped and the first and second contact surfaces are located in a plane different from a plane of extension of the central contact surface of the central portion.

In another aspect, the first and second outer portions respectively comprise a first and a second curved section respectively connecting the first and second contact surfaces to the central portion.

In another aspect, the first and second outer portions are configured to transfer a force applied to the central portion in direction of the first and second contact surfaces to the first and second contact surfaces.

In another aspect, the first and second curved sections respectively include mutually facing side walls, each of said mutually facing side walls forming an angle α with the central contact surface of the central portion of between 45° and 135°. The angle α is optionally about 90°.

In another aspect, the central portion has a first thickness t_{C} and the outer portions have a second thickness to. The first thickness t_{C} is equal to or greater than the second thickness to. The first thickness t_{C} can range from 2mm to 6mm and the second thickness to can range from 2mm to 6mm. The first thickness t_{C} and the second thickness t_{O} are optionally equal to 2mm. The first and second outer portions can extend from the central portion by a distance ranging from 0.5 t_{C} to 2 t_{C}.

In another aspect, the central portion has a first width w_{C} and the outer portions have a second width w_{O}, the first width w_{C} being equal to or greater than the second width w_{O}. The first width w_{C} can range from 6mm to 20mm and the second width w_{O} can range from 4mm to 20mm. In one embodiment, the first width w_{C} is 8mm and the second width w_{O} is 6mm.

In another aspect, the first and second contact surfaces are terminal surfaces with respect to the first and second outer portions Additionally or alternatively, the first and second contact surfaces are perpendicular to an axis of the opening in the central portion.

In another aspect, the clamp is made from a material having a tensile strength of at least 500 MPa and/or a hardness of 200 HV. The clamp can comprise stainless steel of the type 1.4301, 1.4305, and/or 1.4462 (in accordance with EN 10217).

The invention entails several advantages. Rattling effects are minimized, due to the firm coupling between the brake disc ring and the bell. The clamps according to the invention are more durable and less resilient than previously used spring elements.

Abrasion or wear of the bell is reduced, due to the larger contact surfaces between the clamps and the bell. The substantially planar contact surfaces provide contact areas without spots at which excessive pressure is exerted.

In order to implement the invention, no other components need to be modified because the spring element is simply replaced by the clamp. In some cases it might be necessary to use a longer screw to account for the greater thickness of the clamp with respect to the essentially very flat spring elements used previously. Further, replacement is very easy because simply the spring elements have to be replaced by clamps in accordance with the present invention (possibly also including suitable screws). This can easily be done in the field, for example, when problems as described above arise with conventional connecting means.

According to the invention, there is also provided a use of a clamp in accordance with the invention in a brake disc assembly with the first and second contact surfaces contacting a bell of the brake disc assembly, the brake disc assembly comprising a bush of a brake disc ring. The central contact surface can contact the bush. The clamp can exert a compressive force of 7.5kN upon the bell.

In another aspect, in the use of the clamp, contact between the bell and the first and second contact surfaces is achieved by a fastening means arranged to extend through the opening and the bush, optionally the fastening means being engaged to a counter means, the counter means and the fastening means being configured to exert a force respectively upon the brake disc and the clamp, such that a tab of the bell is fixedly held between the bush and the clamp.

According to the invention, there is also provided a brake disc assembly comprising a brake disc, a bell, and multiple connecting means fixedly attaching the brake disc to the bell. Each of the multiple connecting means comprises a clamp according to the invention in order to fixedly attach the brake disc to the bell.

In another aspect, each of the multiple connecting means comprises a bush attached to the brake disc. Additionally or alternatively, each clamp can be held in a rotationally fixed manner. Additionally or alternatively, the first and second outer portions can be in contact with the bell. Additionally or alternatively, each of the multiple connecting means can extend through the opening of the respective central portion of the respective clamp.

### Brief Description of the Drawings

FIG. 1 shows connection means for a brake disc assembly of known type including a spring element;
FIG. 2 shows a cross section of the known connection means of FIG. 1, the cross section plane being radially oriented with respect to the brake disc assembly;
FIG. 3 shows a first embodiment of a connecting means for a brake disc assembly including a clamp in accordance with the present invention;
FIG. 4 shows a plan view of a cross section of the first embodiment of the connecting means as shown in FIG. 3, the cross section plane being radially oriented with respect to the brake disc assembly;
FIG. 5 shows an isometric view of the clamp in accordance with a second embodiment of the present invention;
FIG. 6 shows an isometric view of a cross section of the second embodiment of the connecting means as shown in FIG. 5, the cross section plane being radially oriented with respect to the brake disc assembly;
FIG. 7 shows an isometric view of the clamp in accordance with the first embodiment of the present invention;
FIG. 8 shows an isometric view of the clamp in accordance with a third embodiment of the present invention;

### Detailed Description of the Invention

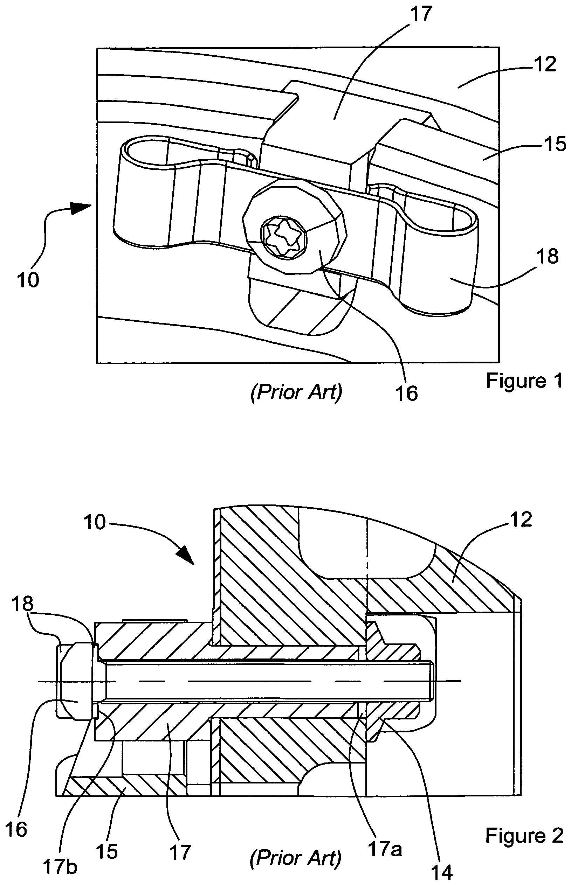

FIG. 1 shows connection means 10 for a brake disc assembly of known type including a spring element 18. The brake disc assembly includes a brake disc ring 12 and a bell 15. A screw 16 and a corresponding nut 14 couple the spring element 18 and a bush 17 to the brake disc ring 12, whereas the spring element 18 is biased against the bell 15. The bush 17 engages a recess present in the bell 15 such that the bush 17 is circumferentially held in a substantially fixed manner with respect to the bell 15, however not preventing a radially sliding motion between the bush 17 and the bell 15. Axial motion between the bush 17 and the bell 15 is restricted in a resilient manner by the spring element 18 being biased against the bell 15. Upon thermal expansion of the brake disc ring 12, the connection means 10 allow for relative motion between bushes 17 (as well as corresponding spring elements 18) and bell 15 in order to prevent excessive mechanical tension between the brake disc ring 12 and the bell 15.

FIG. 2 shows a cross section of the known connection means 10 of FIG. 1, the cross section plane being radially oriented with respect to the brake disc assembly. A longitudinal axis of the bush 17 and the screw 16 lies in the cross section plane. The screw 16 and a corresponding nut 14 fixedly attach the bush 17 and the spring element 18 to the brake disc ring 12. A clearance 17a exists between the bush 17 and the nut 14, such that the bush 17 is forced against the seating provided in the brake disc ring by compressive action exerted by the screw 16 and the nut 14. A recess 17b in bush 17 receives spring element 18 and has a counter shape corresponding to a mounting section of the spring element 18, thereby providing a seat for the spring element 18. The spring element 18 is held, upon contact with bush 17, by the seat such that spring element 18 is prevented from rotating during and after assembly. Spring element 18, fixedly attached to bush 17 and brake disc ring 12 is biased against bell 15. This configuration allows for a resilient coupling between the bell 15 and the brake disc ring 12.

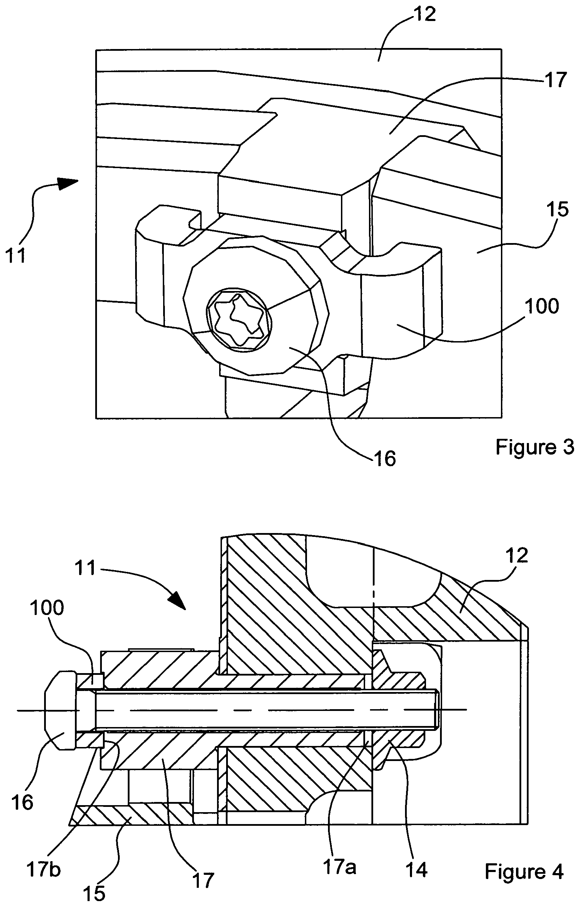

FIG. 3 shows a first embodiment of a connecting means 11 for a brake disc assembly 1 including a clamp 100 in accordance with the invention. Brake disc assembly 1 includes a brake disc ring 12 and a bell 15. A screw 16 and a corresponding nut 14 couple clamp 100 and bush 17 to brake disc ring 12, whereas clamp 100 contacts bell 15. Bush 17 engages a corresponding recess present in bell 15 such that bush 17 is circumferentially held in a substantially fixed manner with respect to bell 15, however not preventing a radially sliding motion between bush 17 and bell 15. In other words, bell 15 can move with respect to the bushes 17 substantially only in a radial manner, radially being defined with respect to an axis of rotation of the brake disc ring 12 or the whole brake disc assembly 1. Such relative motion between bell 15 and bushes 17 occurs, for example, when brake disc assembly 1 absorbs thermal energy during braking and individual component expand due to the heat. Since the expansion coefficient of different materials is not identical, bell 15, for example, expands more than the brake disc ring 12. In such a case, the expansion of bell 15 has to be accommodated by relative motion of the outer rim of bell 15 and bushes 17.

Bush 17 cannot move axially (i.e. in direction of the axis of rotation on the brake disc ring 12) or tangentially (i.e. along the circumference of the brake disc ring 12 or bell 15). Axial motion between bush 17 and bell 15 is restricted by clamp 100 being in contact with bell 15. Upon thermal expansion of the brake disc ring 12, the connection means 11 allow for relative motion between bushes 17 (as well as corresponding clamps 100) and bell 15 in order to prevent excessive mechanical tension between brake disc ring 12 and bell 15 and/or abrasion of a surface of bell 15 in contact with clamp 100.

FIG. 4 shows a cross section of the first embodiment of the connecting means 11 as shown in FIG. 3, the cross section plane being radially oriented with respect to the brake disc assembly 1. A longitudinal axis of bush 17 and screw 16 lies in the cross section plane. Screw 16 and a corresponding nut 14 fixedly attach bush 17 and clamp 100 to the brake disc ring 12.

A clearance 17a exists between bush 17 and nut 14, such that bush 17 is forced against the seating provided in the brake disc ring 12 by compressive action exerted by screw 16 and nut 14. A recess 17b in bush 17 receives clamp 100 and has a counter shape corresponding to the central portion 101 of clamp 100, thereby providing a seat for clamp 100. In more detail, central contact surface 104 at least partially contacts bush 17 at recess 17b. Clamp 100 is held, upon contact with bush 17, by the seat, such that clamp 100 is prevented from rotating during and after assembly. Clamp 100, fixedly attached to bush 17 and brake disc ring 12 is firmly connected with bell 15. This configuration allows for a firm coupling between bell 15 and brake disc ring 12.

In an alternative embodiment (not shown) of connecting means 11, no recess 17b is present. A recess present in clamp 100 similar to recess 17b can fulfil essentially the same function as recess 17b (i.e. preventing clamp 100 from rotating). In this alternative embodiment, recess 17b is not present in bush 17, but a recess is present in clamp 100. The portion of bush 17 that is in contact with clamp 100 engages the recess in clamp 100 such that clamp 100 is held in a rotationally fixed manner with respect to bush 17.

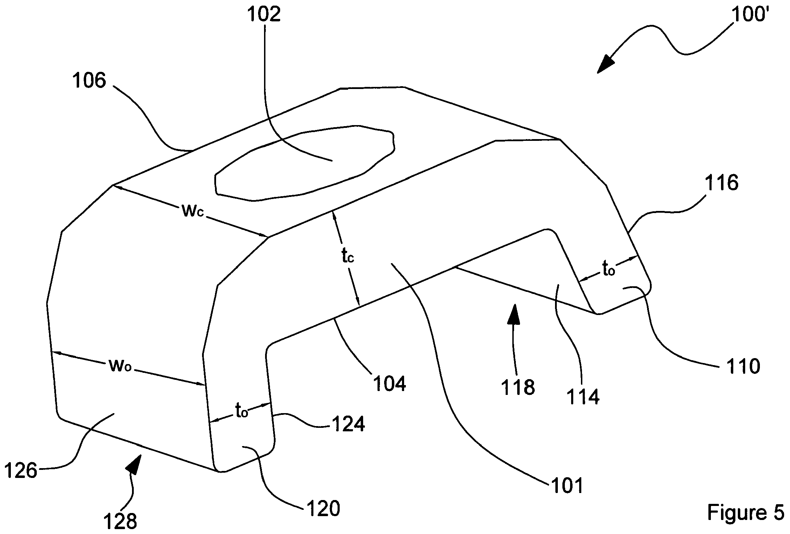

FIG. 5 shows an isometric view of a clamp 100' in accordance with a second embodiment of the present invention. Clamp 100' has a central portion 101 exhibiting an opening 102. Opening 102 is configured to receive a fastening means such as a screw 16 (not shown). The central portion 101 further has a central contact surface 104 on a lower surface thereof. Two outer portions 110 and 120 extend from central portion 101 at opposite ends thereof and terminate in contact surfaces 118 and 128, respectively. The contact surfaces can be substantially planar and parallel to the central contact surface 104. The outer portions can comprise respective curved sections between the contact surfaces 118 and 128 and the central portion 101, respectively.

Clamp 100' has a substantially U-shaped form where the outer portions 110 and 120 extend outwardly from the central portion 101 and curve downward at an angle α of about 90° with respect to the plane of the central contact surface 104. This means that the inner walls 114 and 124 as well as the outer walls 116 and 126 of the outer portions 110 and 120, respectively, form a surface which forms an angle of 90° with respect to the central contact surface 104. In this case, when the angle is 90°, inner walls 114 and 124 and outer walls 116 and 126 are all substantially parallel to each other and substantially perpendicular to central contact surface 104.

In some embodiments, the angle ranges from 45° to 135°. At angles smaller than 90°, the respective contact surfaces 118 and 128 are farther apart from each other than the upper ends of the inner and outer side walls 114, 116, 124, and 126, respectively. At angles greater than 90°, the respective contact surfaces 118 and 128 are closer to each other than the upper ends of the inner and outer side walls 114, 116, 124, and 126, respectively.

The central portion 101 of clamp 100' has a width w_{C} and a thickness t_{C}. Outer portions of claim 100' have a width w_{O} and a thickness to. In the embodiment shown in FIG. 5, width w_{C} and width w_{O} are substantially equal. Further, thickness t_{C} is greater than thickness t_{O}. In some embodiments, width w_{C} can be greater than width w_{O} and/or thickness t_{C} can be less than or greater than thickness to, depending on the individual requirements. In the embodiment shown in FIG. 5, thickness t_{C} is about 3mm and thickness to is about 2mm. Further, width w_{C} and width w_{O} are about 8mm. In general, width w_{C} can range from 8mm to 20mm and width w_{O} can range from 4mm to 20mm. Further, thickness t_{C} can range from about 3mm to about 6mm and thickness to can range from about 2mm to about 6mm. Opening 102 has a diameter of 4mm, whereas the diameter can generally range from about 3mm to about 5mm.

Clamp 100' may be made from stainless steel 1.4301 in accordance with EN 10217 (Designation X5CrNi18-10; SAE grade 304, UNS (unified numbering system) grade S30400). Depending on particular applications, clamp 100' can be made from other suitable materials and/or alloys, including, but not limited to, stainless steel 1.4301, stainless steel 1.4305, and stainless steel 1.4662.

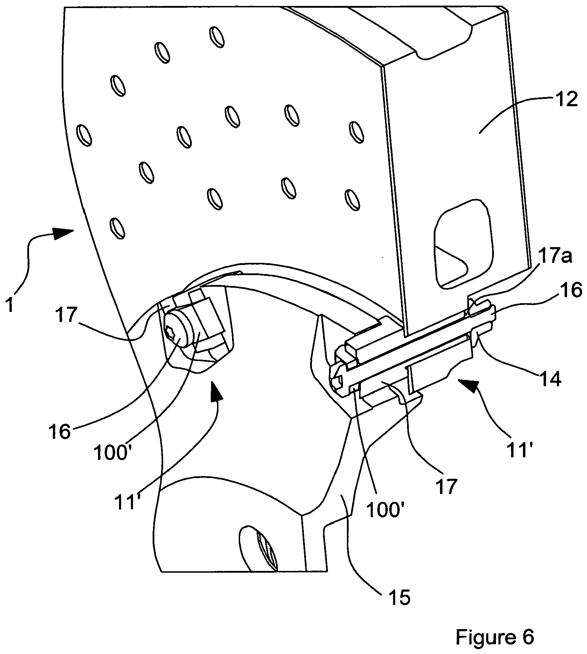

FIG. 6 shows an isometric view of a cross section of a connecting means 11' according to the second embodiment, including clamp 100', where the cross section plane is radially oriented with respect to brake disc assembly 1. FIG. 6 shows a section of brake disc assembly 1 having two connecting means 11', one of which is presented in a radial cross section. Brake disc assembly 1 has ten connecting means 11' connecting bell 15 to brake disc ring 12. However, brake disc assembly 1 can have less or more connecting means 11', depending on the individual application. Generally, brake disc assembly can have six or more connecting means 11'.

The longitudinal axis of bush 17 and screw 16 on the right hand side of FIG. 6 lies in the cross section plane. Screw 16 and a corresponding nut 14 fixedly attach bush 17 and clamp 100' to the brake disc ring 12. A clearance 17a exists between bush 17 and nut 14, such that bush 17 is forced against the seating provided in the brake disc ring 12 by compressive action exerted by screw 16 and nut 14. A recess 17b in bush 17 receives clamp 100' and has a counter shape corresponding to the central portion 101 of clamp 100', thereby providing a seat for clamp 100'. In more detail, central contact surface 104 at least partially contacts bush 17 at recess 17b. Clamp 100' is held, upon contact with bush 17, by the seat such that clamp 100' is prevented from rotating during and after assembly. Clamp 100', fixedly attached to bush 17 and brake disc ring 12, is firmly connected to bell 15. This configuration allows for a firm coupling between bell 15 and brake disc ring 12.

The extension of outer portions 110 and 120 of clamp 100' in a direction perpendicular to central contact surface 104 is chosen to establish a firm connection between bell 15 and connecting means 11' including bush 17, albeit facilitating relative sliding motion upon thermal expansion of one or more components. In other words, a portion of bell 15 held between bush 17 and clamp 100' is slightly larger than a distance between contact surfaces 118 and 128 of clamp 100' and a corresponding counter surface of bush 17 (seen in FIG. 6 as a slight "L" shape of the upper part of bush 17 shown in cross section, where the foot of the "L" provides the counter surface) in an assembled state. The pressure of clamp 100' and bush 17 upon the corresponding portion of bell 15 is chosen so as to facilitate a firm coupling but still allow for relative sliding motion upon thermal expansion of components.

Contact surfaces 118 and 128 of clamps 100, 100', and 100" are mounted in connecting means 11 and 11' exerting a force of 7.5kN upon bell 15, whereas substantially 50% of the force is applied by each of the contact surfaces 118 and 128. Generally, the force ranges from about 5kN to about 10kN. In order to provide connecting means 11 and 11' with a desired force exerted by clamps 100, 100', or 100", before tightening of the fastening means 16, there may be a clearance present between the central contact surface 104 of clamp 100, 100', or 100". In some embodiments, due to manufacturing tolerances of the individual components, a clearance may be present even after tightening of the fastening means, in order to prevent a case where contact is made between central contact surface 104 and a corresponding bush 17, before the desired compressive force is achieved.

The pressure or bias of clamp 100' and bush 17 effected upon the corresponding portion of bell 15 is applied by fastening means 16, such as screw 16 shown in FIG. 6. Screw 16 is fastened during assembly of brake disc assembly 1 by monitoring the fastening angle. This means that after reaching a minimum torque of 3Nm (or 4Nm depending on the application), screws 16 are fastened by effecting fastening (i.e. turning) by turning the screw further by a specified angle (e.g. 90°), resulting in a final torque of between about 5 Nm to about 14.5 Nm. This means, each screw 16 is tightened with a torque of between about 3Nm and about 4Nm and then turned an additional 90° (i.e. one quarter turn), resulting in a specific minimum torque.

Generally, brake disc assembly 1 can be assembled in a number of steps. A crank is provided, in which a number of nuts 14, for example 10 nuts 14, are inserted into pre-defined slots. Next, brake disc ring 12 is positioned on the crank such that corresponding bores in brake disc 12 are in superimposition with nuts 14 located in the slots of the crank. A corresponding number of bushes 17 is then inserted into the bores present in brake disc ring 12. Bell 15 is then placed upon bushes 17 provided in brake disc ring 12 in an axial manner, facilitating precise alignment of bell 15 with the bushes 17 by way of a substantially tight fit between recesses in bell 15 substantially corresponding to the shape, number, and arrangement of bushes 17. Similarly, a corresponding number of clamps 100, 100', or 100" are placed on bushes 17 such that opening 12 are in superimposition with corresponding bores in bushes 17. Subsequently, fastening means 16, for example screws 16 (e.g., Titanium A2-70 or stainless steel 1.4529 according to EN 10217), are inserted into the openings 12 and are fastened in an angularly controlled manner to effect a firm coupling between bell 15 and brake disc ring 12, providing a specific squeezing action between clamps 100, 100', or 100" and corresponding bushes 17 upon corresponding portions of bell 15.

In an alternative embodiment (not shown) of connecting means 11', no recess 17b is present. A recess present in clamp 100' similar to recess 17b can fulfil essentially the same function as recess 17b (i.e. preventing clamp 100 from rotating). In this alternative embodiment, recess 17b is not present in bush 17, but a recess is present in clamp 100'. The portion of bush 17 that is in contact with clamp 100' engages the recess in clamp 100 such that clamp 100' is held in a rotationally fixed manner with respect to bush 17.

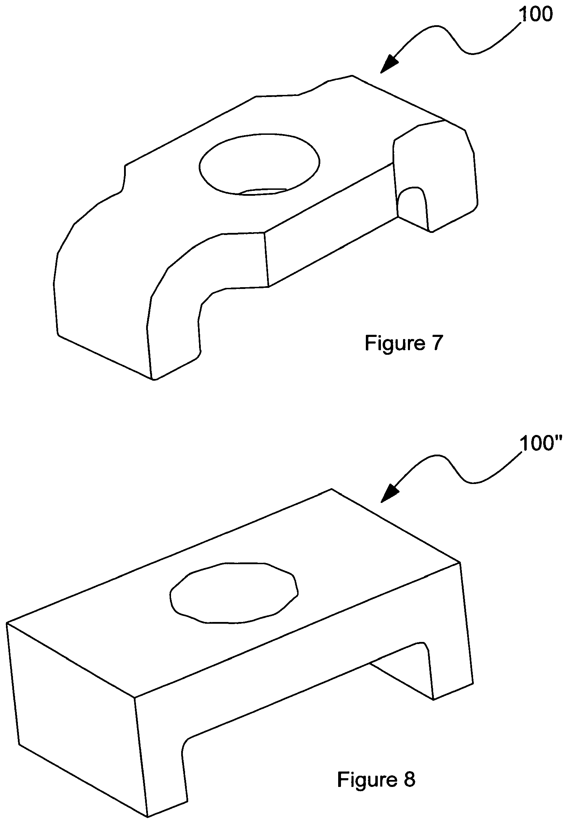

FIG. 7 shows an isometric view of clamp 100 in accordance with the first embodiment of the present invention. Generally, the properties of clamp 100 are the same as those of clamp 100' as described above, with the exception of what is described in the following. As shown in FIGs. 3 and 4, clamp 100 has substantially a "U" shape, where the central portion 101 has a width w_{C} greater than the width w_{O} of outer portions 110 and 120. Further, the central portion 101 has a length substantially equal to its width w_{C}. Correspondingly, outer portions 110 and 120, where extending from central portion 101, have a tapered configuration providing a transition section from the width w_{C} of central portion 101 to width w_{O} of outer portions 110 and 120, respectively. The tapered portion of outer portions 110 and 120 can have an angle of about 45° with respect to a side surface of central portion 101.

FIG. 8 shows an isometric view of clamp 100" in accordance with a third embodiment of the present invention. Generally, the properties of clamp 100" are the same as those of clamp 100' as described above, with the exception of what is described in the following. Clamp 100" has, as clamp 100', outer portions 110 and 120 having the same width w_{O} as width w_{C} of central portion 101. Clamp 100" has substantially a "U" shape but does not have curved sections as clamps 100 and 100'. Instead, clamp 100" has rectangular sections, providing outer portions 110 and 120 with a rectangular profile.

Outer portions 110 and 120 of clamp 100" extend outwardly from the central portion 101 and rectangularly downward at an angle α of substantially 90° with respect to the plane of the central contact surface 104. Inner walls 114 and 124 as well as the outer walls 116 and 126 of outer portions 110 and 120, respectively, form a surface which forms an angle of 90° with respect to the central contact surface 104.

## Claims

1. A clamp (100, 100', 100") for a brake disc assembly, the clamp comprising:
a central portion (101) having an opening (102) and a central contact surface (104); and
a first and a second outer portion (110, 120) respectively arranged at opposite ends of the central portion (101), **characterized in that**
the first and second outer portions (110, 120) extend transversely to the central contact surface (104) and respectively provide a first and a second contact surface (118, 128) which, in an assembled state with a bell (15) of a brake disc assembly (1), are configured to contact the bell (15) of the brake disc assembly (1), the first and second contact surfaces (118, 128) being substantially planar and substantially parallel with respect to the central contact surface (104) of the central portion (101), wherein the clamp is substantially U-shaped and wherein the first and second contact surfaces (118, 128) are located in a plane different from a plane of extension of the central contact surface (104) of the central portion (101).

2. The clamp (100, 100', 100") according to claim 1, wherein the first and second outer portions (110, 120) have the same shape and are symmetrically arranged with respect to the central portion (101).

3. The clamp (100, 100', 100") according to one of the preceding claims, wherein the first and second outer portions (110, 120) respectively comprise a first and a second curved section respectively connecting the first and second contact surfaces (118, 128) to the central portion (101).

4. The clamp (100, 100', 100") according to one of the preceding claims, wherein the first and second outer portions (110, 120) are configured to transfer a force applied to the central portion (101) in direction of the first and second contact surfaces (118, 128) to the first and second contact surfaces (118, 128).

5. The clamp (100, 100', 100") according to one of claims 3 and 4, wherein the first and second curved sections respectively include mutually facing side walls (114, 124), each of said mutually facing side walls (114, 124) forming an angle α with the central contact surface (104) of the central portion (101) of between 45° and 135°, optionally wherein the angle α is substantially 90°.

6. The clamp (100, 100', 100") according to one of the preceding claims, wherein the central portion (101) has a first thickness t_{C} and the outer portions (110, 120) have a second thickness t_{O}, the first thickness t_{C} being equal to or greater than the second thickness t_{O}.

7. The clamp (100, 100', 100") according to the preceding claim, wherein the first thickness t_{C} ranges from 2mm to 4mm and wherein the second thickness t_{O} ranges from 2mm to 4mm, optionally wherein the first thickness t_{C} and the second thickness t_{O} are equal to 2mm.

8. The clamp (100, 100', 100") according to one of claims 6 and 7, wherein the first and second outer portions (118, 128) extend from the central portion (101) by a distance ranging from 0.5 t_{C} to 2 tc.

9. The clamp (100, 100', 100") according to one of the preceding claims, wherein the central portion (101) has a first width w_{C} and the outer portions (110, 120) have a second width w_{O}, the first width w_{C} being equal to or greater than the second width w_{O}.

10. The clamp (100, 100', 100") according to claim 9, wherein the first width w_{C} ranges from 6mm to 20mm and wherein the second width w_{O} ranges from 4mm to 20mm, optionally wherein the first width w_{C} is 8mm and the second width w_{O} is 6mm.

11. The clamp (100, 100', 100") according to one of the preceding claims, wherein the first and second contact surfaces (118, 128) are terminal surfaces with respect to the first and second outer portions (110, 120), and/or wherein the first and second contact surfaces (118, 128) are perpendicular to an axis of the opening (102) in the central portion (101).

12. The clamp (100, 100', 100") according to one of the preceding claims, wherein the clamp is made from a material having a tensile strength of at least 500 MPa and/or a hardness of 200 HV, optionally wherein the clamp (100, 100', 100") comprises stainless steel of the type 1.4301, 1.4305, and/or 1.4462 (in accordance with EN 10217).

13. Use of a clamp (100, 100', 100") according to any one of the preceding claims in a brake disc assembly (1) with the first and second contact surfaces (118, 128) contacting a bell (15) of the brake disc assembly (1), the brake disc assembly (1) comprising a bush (17) of a brake disc ring (12), optionally with the central contact surface (104) contacting the bush (17).

14. A brake disc assembly (1) comprising:
a brake disc (12);
a bell (15); and
multiple connecting means (11, 11') fixedly attaching the brake disc (12) to the bell (15), **characterized in that**
each of the multiple connecting means (11, 11') comprises a clamp (100, 100', 100") according to any one of claims 1 to 12, in order to fixedly attach the brake disc (12) to the bell (15).

## Patentansprüche

1. Halterung (100, 100', 100") für eine Bremsscheibenanordnung, wobei die Halterung Folgendes umfasst:
einen mittleren Abschnitt (101) mit einer Öffnung (102) und einer mittleren Kontaktoberfläche (104); und
einen ersten und einen zweigen Außenabschnitt (110, 120), die jeweils an einander gegenüberliegenden Enden des mittleren Abschnitts (101) angeordnet sind, **dadurch gekennzeichnet, dass**
sich der erste und der zweite Außenabschnitt (110, 120) quer zu der mittleren Kontaktoberfläche (104) erstrecken und jeweils eine erste und eine zweite Kontaktoberfläche (118, 128) bereitstellen, die in einem zusammengebauten Zustand mit einer Glocke (15) einer Bremsscheibenanordnung (1) konfiguriert sind, die Glocke (15) der Bremsscheibenanordnung (1) zu kontaktieren, wobei die erste und die zweite Kontaktoberfläche (118, 128) im Wesentlichen eben und im Wesentlichen parallel bezogen auf die mittlere Kontaktoberfläche (104) des mittleren Abschnitts (101) sind, wobei die Halterung im Wesentlichen U-förmig ist und wobei die erste und die zweite Kontaktoberfläche (118, 128) sich in einer von einer Erweiterungsebene der mittleren Kontaktoberfläche (104) des mittleren Abschnitts (101) verschiedenen Ebene befinden.

2. Halterung (100, 100', 100") nach Anspruch 1, wobei der erste und der zweite Außenabschnitt (110, 120) die gleiche Form aufweisen und bezogen auf den mittleren Abschnitt (101) symmetrisch angeordnet sind.

3. Halterung (100, 100', 100") nach einem der vorhergehenden Ansprüche, wobei der erste und der zweite Außenabschnitt (110; 120) jeweils einen ersten und einen zweiten gekrümmten Teil aufweisen, die die erste und die zweite Kontaktoberfläche (118, 128) jeweils mit dem mittleren Abschnitt (101) verbinden.

4. Halterung (100, 100', 100") nach einem der vorhergehenden Ansprüche, wobei der erste und der zweite Außenabschnitt (110, 120) konfiguriert sind, eine auf den mittleren Abschnitt (101) in Richtung der ersten und der zweiten Kontaktoberfläche (118, 128) aufgebrachte Kraft auf die erste und die zweite Kontaktoberfläche (118, 128) zu übertragen.

5. Halterung (100, 100', 100") nach einem der Ansprüche 3 und 4, wobei der erste und der zweite gekrümmte Teil jeweils einander zugewandte Seitenwände (114, 124) enthalten, wobei jede der einander zugewandten Seitenwände (114, 124) mit der mittleren Kontaktoberfläche (104) des mittleren Abschnitts (101) einen Winkel α von zwischen 45° und 135° ausbildet, optional wobei der Winkel α im Wesentlichen 90° beträgt.

6. Halterung (100, 100', 100") nach einem der vorhergehenden Ansprüche, wobei der mittlere Abschnitt (101) eine erste Dicke t_{C} aufweist und die Außenabschnitte (110, 120) eine zweite Dicke t_{O} aufweisen, wobei die erste Dicke t_{C} gleich groß wie oder größer als die zweite Dicke t_{O} ist.

7. Halterung (100, 100', 100") nach dem vorhergehenden Anspruch, wobei die erste Dicke t_{C} von 2 mm bis 4 mm reicht und wobei die zweite Dicke t_{O} von 2 mm bis 4 mm reicht, optional wobei die erste Dicke t_{C} und die zweite Dicke t_{O} gleich 2 mm sind.

8. Halterung (100, 100', 100") nach einem der Ansprüche 6 und 7, wobei sich der erste und der zweite Außenabschnitt (118, 128) um einen Abstand, der von 0,5 t_{C} bis 2 t_{C} reicht, von dem mittleren Abschnitt (101) aus erstrecken.

9. Halterung (100, 100', 100") nach einem der vorhergehenden Ansprüche, wobei der mittlere Abschnitt (101) eine erste Breite w_{C} aufweist und die Außenabschnitte (110, 120) eine zweite Breite w_{O} aufweisen, wobei die erste Breite w_{O} gleich groß wie oder größer als die zweite Breite w_{O} ist.

10. Halterung (100, 100', 100") nach Anspruch 9, wobei die erste Breite w_{C} von 6 mm bis 20 mm reicht und wobei die zweite Breite w_{O} von 4 mm bis 20 mm reicht, optional wobei die erste Breite w_{C} 8 mm beträgt und die zweite Breite w_{O} 6 mm beträgt

11. Halterung (100, 100', 100") nach einem der vorhergehenden Ansprüche, wobei die erste und die zweite Kontaktoberfläche (118, 128) bezogen auf den ersten und den zweiten Außenabschnitt (110, 120) Endoberflächen sind und/oder wobei die erste und die zweite Kontaktoberfläche (118, 128) senkrecht zu einer Achse der Öffnung (102) in dem mittleren Abschnitt (101) sind.

12. Halterung (100, 100', 100") nach einem der vorhergehenden Ansprüche, wobei die Halterung aus einem Material hergestellt ist, das eine Zugfestigkeit von wenigstens 500 MPa und/oder eine Härte von 200 HV aufweist, optional wobei die Halterung (100, 100', 100") rostfreien Stahl vom Typ 1.4301, 1.4305 und/oder 1.4462 umfasst (gemäß EN 10217).

13. Verwendung einer Halterung (100, 100', 100") nach einem der vorhergehenden Ansprüche in einer Bremsscheibenanordnung (1), wobei die erste und die zweite Kontaktoberfläche (118, 128) eine Glocke (15) der Bremsscheibenanordnung (1) kontaktieren, wobei die Bremsscheibenanordnung (1) eine Buchse (17) eines Bremsscheibenrings (12) umfasst, optional wobei die mittlere Kontaktoberfläche (104) die Buchse (17) kontaktiert.

14. Bremsscheibenanordnung (1), Folgendes umfassend:
eine Bremsscheibe (12);
eine Glocke (15); und
mehrere Verbindungsmittel (11, 11'), die die Bremsscheibe (12) fest an der Glocke (15) befestigen, **dadurch gekennzeichnet, dass**
jedes der mehreren Verbindungsmittel (11, 11') eine Halterung (100, 100', 100") nach einem der Ansprüche 1 bis 12 umfasst, um die Bremsscheibe (12) fest an der Glocke (15) zu befestigen.

## Revendications

1. Pince (100, 100', 100") destinée à un ensemble disque de frein, la pince comportant :
une partie centrale (101) présentant une ouverture (102) et une surface de contact centrale (104) ; et
une première et une seconde partie externes (110, 120) agencées respectivement aux extrémités opposées de la partie centrale (101), **caractérisée en ce que** les première et seconde parties externes (110, 120) s'étendent transversalement à la surface de contact centrale (104) et fournissent respectivement une première et une seconde surfaces de contact (118, 128) qui, dans un état assemblé avec une cloche (15) d'un ensemble disque de frein (1), sont configurées pour venir en contact avec la cloche (15) de l'ensemble disque de frein (1), les première et seconde surfaces de contact (118, 128) étant sensiblement planes et sensiblement parallèles par rapport à la surface de contact centrale (104) de la partie centrale (101), la pince étant sensiblement en forme de U et les première et seconde surfaces de contact (118, 128) étant situées dans un plan différent d'un plan d'extension de la surface de contact centrale (104) de la partie centrale (101).

2. Pince (100, 100', 100") selon la revendication 1, dans laquelle les première et seconde parties externes (110, 120) ont la même forme et sont agencées symétriquement par rapport à la partie centrale (101).

3. Pince (100, 100', 100") selon l'une quelconque des revendications précédentes, dans laquelle les première et seconde parties externes (110, 120) comportent respectivement une première et une seconde sections courbes reliant respectivement les première et seconde surfaces de contact (118, 128) à la partie centrale (101).

4. Pince (100, 100', 100") selon l'une des revendications précédentes, dans laquelle les première et seconde parties externes (110, 120) sont configurées pour transférer une force appliquée sur la partie centrale (101) dans la direction des première et seconde surfaces de contact (118, 128) aux première et seconde surfaces de contact (118, 128).

5. Pince (100, 100', 100") selon l'une quelconque des revendications 3 et 4, dans laquelle les première et seconde sections courbes comprennent respectivement des parois latérales (114, 124) se faisant mutuellement face, chacune desdites parois latérales (114, 124) se faisant mutuellement face formant un angle α avec la surface de contact centrale (104) de la partie centrale (101) compris entre 45° et 135°, éventuellement dans laquelle l'angle α est sensiblement de 90°,

6. Pince (100, 100', 100") selon l'une quelconque des revendications précédentes, dans laquelle la partie centrale (101) présente une première épaisseur t_{C} et les parties externes (110, 120) ont une seconde épaisseur t_{O}, la première épaisseur t_{C} étant égale ou supérieure à la seconde épaisseur t_{O}.

7. Pince (100, 100', 100") selon la revendication précédente, dans laquelle la première épaisseur t_{C} est comprise entre 2 et 4 mm et dans laquelle la seconde épaisseur t_{O} est comprise entre 2 et 4 mm, éventuellement dans laquelle la première épaisseur t_{C} et la seconde épaisseur t_{O} sont égales à 2 mm.

8. Pince (100, 100', 100") selon l'une des revendications 6 et 7, dans laquelle les première et seconde parties externes (118, 128) s'étendent depuis la partie centrale (101) sur une distance comprise entre 0,5 t_{C} et 2 t_{C}.

9. Pince (100, 100', 100") selon l'une des revendications précédentes, dans laquelle la partie centrale (101) présente une première largeur w_{C} et les parties externes (110, 120) présentent une seconde largeur w_{O}, la première largeur w_{C} étant égale ou supérieure à la seconde largeur w_{O}.

10. Pince (100, 100', 100") selon la revendication 9, dans laquelle la première largeur w_{C} est comprise entre 6 et 20 mm et dans laquelle la seconde largeur w_{O} est comprise entre 4 et 20 mm, éventuellement dans laquelle la première largeur w_{C} est de 8 mm et la seconde largeur w_{O} est de 6 mm.

11. Pince (100, 100', 100") selon l'une quelconque des revendications précédentes, dans laquelle les première et seconde surfaces de contact (118, 128) sont des surfaces terminales par rapport aux première et seconde parties externes (110, 120), et/ou dans laquelle les première et seconde surfaces de contact (118, 128) sont perpendiculaires à un axe de l'ouverture (102) dans la partie centrale (101).

12. Pince (100, 100', 100") selon l'une des revendications précédentes, dans laquelle la pince est constituée d'une matière ayant une résistance à la traction d'au moins 500 MPa et/ou une dureté de 200 HV, éventuellement dans laquelle la pince (100, 100', 100") comporte de l'acier inoxydable du type 1.4301, 1.4305, et/ou 1.4462 (conformément à la norme EN 10217).

13. Utilisation d'une pince (100, 100', 100") selon l'une quelconque des revendications précédentes dans un ensemble disque de frein (1) avec les première et seconde surfaces de contact (118, 128) venant en contact avec une cloche (15) de l'ensemble disque de frein (1), l'ensemble disque de frein (1) comportant un manchon (17) d'une bague de disque de frein (12), éventuellement avec la surface de contact centrale (104) venant en contact avec le manchon (17).

14. Ensemble disque de frein (1) comportant :
un disque de frein (12) ;
une cloche (15) ; et
des moyens de liaison multiples (11, 11') fixant de manière inamovible le disque de frein (12) à la cloche (15), **caractérisé en ce que**
chacun des moyens de liaison multiples (11, 11') comporte une pince (100, 100', 100") selon l'une quelconque des revendications 1 à 12, afin de fixer de manière inamovible le disque de frein (12) à la cloche (15).
